# EUROPÄISCHE PATENTSCHRIFT

(11) **EP 3 359 350 B1**
(45) Veröffentlichungstag und Bekanntmachung des Hinweises auf die Patenterteilung: **15.05.2024**
(21) Anmeldenummer: 16791317.7
(22) Anmeldetag: 10.10.2016
(51) Int. Cl.: B25J 9/16, G05B 19/409, G05B 19/425, B25J 13/06

(54) **ROBOTERSYSTEM**
ROBOT SYSTEM
SYSTÈME ROBOTIQUE

(30) Priorität: 08.10.2015 DE 102015012961
(43) Veröffentlichungstag der Anmeldung: 15.08.2018
(73) Patentinhaber: Kastanienbaum GmbH, 80538 München (DE)
(72) Erfinder: Haddadin, Sami, Prof.Dr., 30173 Hannover (DE)
(74) Vertreter: Habermann, Hruschka & Schnabel
(86) Internationale Anmeldenummer: PCT/EP2016/074252
(87) Internationale Veröffentlichungsnummer: WO 2017/060540

(56) Entgegenhaltungen:
- EP-A1- 2 129 498
- WO-A1-2015/113757
- DE-A1-102013 109 753
- DE-T2- 69 921 721
- US-A1- 2013 151 010
- US-A1- 2013 255 426

## Beschreibung

Die Erfindung betrifft ein Robotersystem mit zumindest einem Roboterarm, an dessen Ende während der Operation des Robotersystems ein Effektor angebracht sein kann, der z.B. aus einem Werkzeug bestehen kann.

Roboter haben sich inzwischen in vielen Bereichen der Industrie etabliert und werden z.B. in der Automobilindustrie zum Montieren, Kleben, Schrauben, Schneiden, Schweißen, Lackieren oder Heben von schweren Gegenständen verwendet.

### < Einfügungsseite 1a >

Um einem Robotersystem die gewünschten Operationen beizubringen, muss das Robotersystem programmiert werden. Das kann mit einer On-line- oder Off-line-Methode durchgeführt werden, wobei bei der Off-line-Methode das Roboterprogramm ohne Benutzung des Roboters erstellt wird.

Bei der On-Line-Programmierung wird der Roboter zur Programmierung benötigt, was z.B. bei der direkten Teach-in-Programmierung der Fall ist. Hier werden die einzelnen Stützpunkte der gewünschten Bewegungsbahnen durch direktes Führen des Effektors durch einen Bediener angefahren und die jeweilige Stellung des Effektors, z.B. eines Greifwerkzeugs, über die internen Geber ermittelt und gespeichert. Nachdem die Bahngeometrie in dieser Weise programmiert wurde, kann das Bahnprogramm durch Zusatzanweisungen, die über ein externes Handprogrammiergerät eingegeben werden, ergänzt werden.

Die bisherigen Verfahren der beschriebenen On-Line-Programmierung sind für den Bediener zeitaufwändig und wenig komfortabel.

So ist beispielsweise aus der US 2013/0255426 A1 ein Robotersystem mit einem aus mehreren Armgliedern bestehenden Roboterarm bekannt, der vielseitig einsetzbar ist. Robotersysteme mit externen Eingabe- und Anzeigevorrichtungen sind u.a. aus der EP 2 129 498 A1 und der US 2013/0151010 A1 bekannt.

DE 10 2013 019 869 A1 betrifft einen Roboterarm mit wenigstens zwei gegeneinander beweglichen Armmodulen und wenigstens einem manuell betätigbaren Eingabemodul zur Generierung von Steuersignalen zur Steuerung des Roboterarms auf Grundlage einer Benutzereingabe.

DE 199 28 519 A1 bezieht sich allgemein auf dreidimensionale Koordinatenmeßmaschinen und -systeme, insbesondere auf ein neues und verbessertes Display für ein dreidimensionales Koordinaten-Meßsystem, das eine verbesserte Genauigkeit und leichtere Bedienbarkeit aufweist.

Es ist daher die Aufgabe der vorliegenden Erfindung ein Robotersystem zu schaffen, bei dem die Programmierung des Robotersystems im Vergleich zu bisherigen Systemen schneller und einfacher durchgeführt werden kann.

Diese Aufgabe wird durch ein Robotersystem gelöst, wie es im Anspruch 1 angegeben ist.

Vorteilhafte Ausführungsformen der Erfindung sind in den Unteransprüchen 2 bis 22 angegeben.

Ausführungsbeispiele der Erfindung werden anhand der beigefügten Zeichnungen erläutert.

Es zeigen:
Fig. 1 einen Roboter gemäß einer Ausführungsform des Robotersystems gemäß der Erfindung;
Fig. 2 ein als Pilotkopf bezeichnetes letztes Roboterarmglied des Roboterarms des erfindungsgemäßen Robotersystems, das bei einer Ausführungsform des erfindungsgemäßen Robotersystems zum Einsatz kommt;
Fig. 3 einen Teil einer Eingabevorrichtung, die bei einer bevorzugten Ausführungsform des erfindungsgemäßen Robotersystems zum Einsatz kommt.

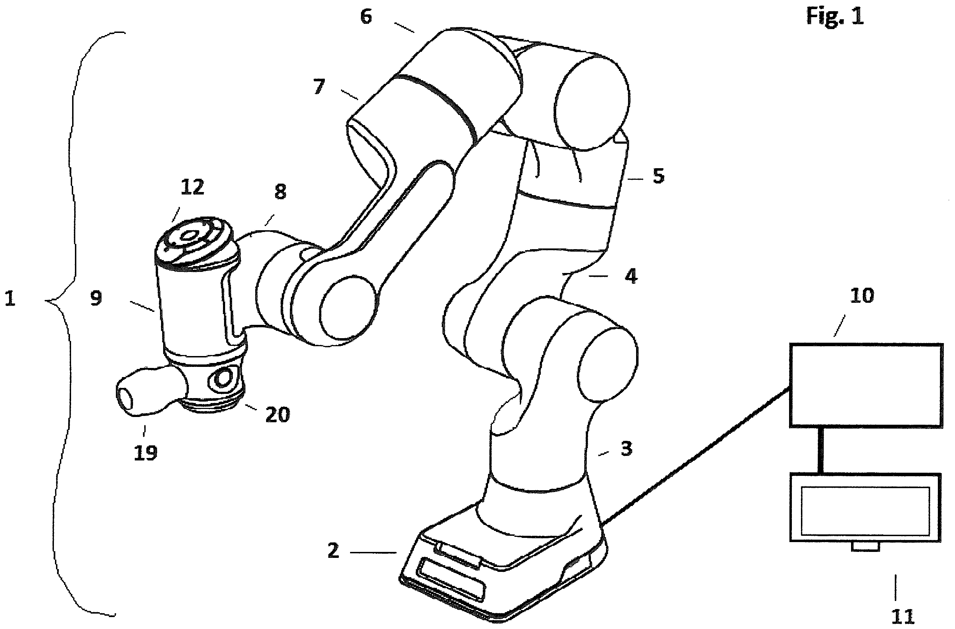

Fig. 1 zeigt ein erfindungsgemäßes Robotersystem, das einen Roboter 1 umfasst, der auf einem Roboterfuß 2 steht, der einen Roboterarm trägt, der aus sieben Roboterarmgliedern 3, 4, 5, 6, 7, 8 und 9 besteht, die über Bewegungsachsen (Gelenke) miteinander verbunden sind. Das letzte Roboterarmglied 9, das hier auch nachfolgend als Pilotkopf bezeichnet wird, ist dabei so ausgebildet, dass im unteren Teil des Pilotkopfes ein (in der Fig. 1 nicht dargestellter) Effektor angebracht werden kann, der die Interaktion des Roboters mit der Umwelt bewirken kann.

Effektoren, die bei dem erfindungsgemäßen Robotersystem eingesetzt werden, können z.B. Werkzeuge zur Werkstückbearbeitung, z.B. ein Bohrer, Greifersysteme zur Handhabung und Manipulation von Objekten, Messmittel zur Ausführung von Prüfaufträgen oder Kameras sein, mit denen der Roboter Beobachtungen durchführen kann.

Der Roboter 1 ist mit einem Computer 10 verbunden, der die Steuerung des Roboters 1 übernimmt und mit einer Anzeigevorrichtung 11 verbunden ist, auf der eine grafische Benutzeroberfläche zur Programmierung des Roboters angezeigt werden kann und die z.B. aus einem Computerbildschirm oder dem Bildschirm eines Laptops bestehen kann. Der Computer 10 wird nachfolgend auch als Steuereinheit bezeichnet.

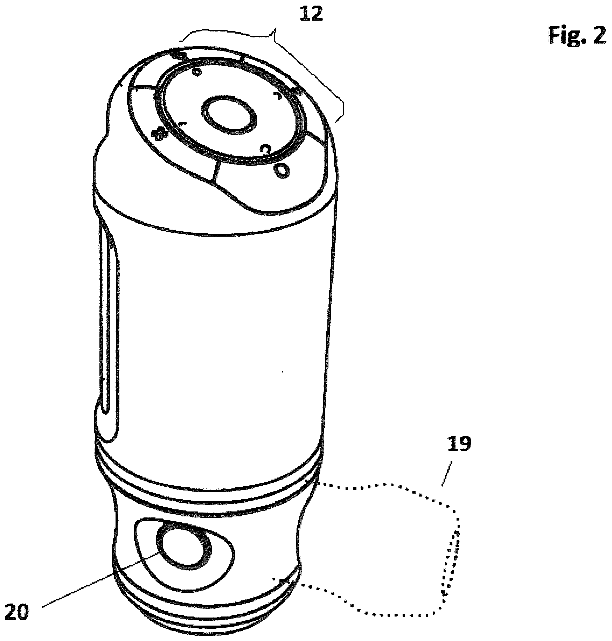

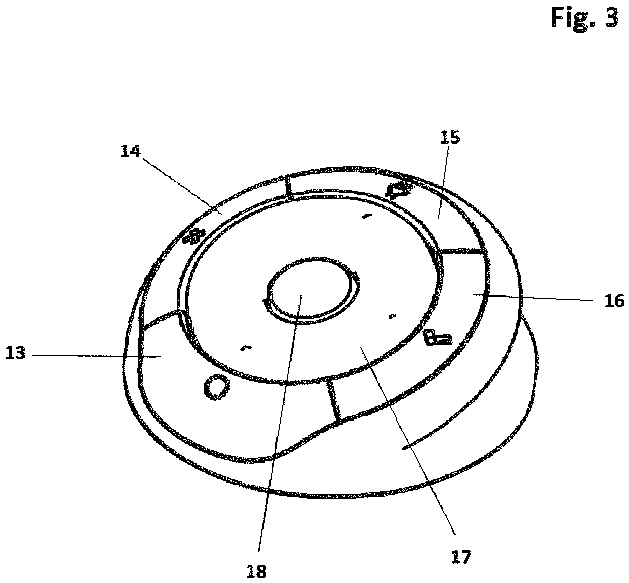

Der Pilotkopf 9 des Robotersystems, der in Fig. 2 in größerer Dimension dargestellt ist, weist im oberen Bereich ein Tastenpanel 12 auf, das ebenfalls in größerer Dimension in der Fig. 3 dargestellt ist. Das in der Fig. 3 dargestellte Tastenpanel weist vier Bedienungstasten 13, 14, 15 und 16 in Form von Kurzhubtastern auf, die mit verschiedenen Funktionen, die häufig vom Bediener im Rahmen der Programmierung und/oder Parametrierung des Robotersystems aufgerufen werden müssen, wie z.B. Löschen, Speichern oder Einstellen, belegt sein können und mit entsprechenden Symbolen gekennzeichnet sind.

Die vier Bedienungstasten 13, 14, 15 und 16 umgeben kreisförmig einen D-Pad-Kurzhubtaster 17, der nach oben, unten, links und rechts gekippt werden kann, um z.B. einen Cursor oder eine Auswahl in einem auf der grafischen Benutzeroberfläche der Anzeigevorrichtung dargestellten Menü in den Richtungen oben, unten, links und rechts zu steuern. Zusammengefasst stellen die an dem Roboterarm angebrachten Taster des Tastenpanels 12 sowie der Taster 20 eine Eingabevorrichtung dar.

Anstelle eines D-Pad-Kurzhubtasters können auch andere Richtungstasten zur Cursorsteuerung verwendet werden, z.B. vier voneinander isolierte Taster für jede der Richtungen oben, unten, links und rechts.

In der Mitte des D-Pad-Kurzhubtasters 17 ist eine transparente Leuchtfläche 18 angebracht, die durch darunter angebrachte Leuchtelemente, z.B. eine oder mehrere LEDs, die von der Steuereinheit aktiviert werden können, in einer Farbe oder verschiedenen Farben beleuchtet werden kann.

Im unteren Teil des Pilotkopfes 9 ist noch ein Griff 19 befestigt, mit dem der Pilotkopf durch einen Bediener des Robotersystems bequem geführt werden kann.

Ferner befindet sich im unteren Teil des Pilotkopfes 9 ein weiterer Taster 20, der so auf dem Pilotkopf angebracht ist, das er vom Bediener des Robotersystems mit der gleichen Hand bedient werden kann, die den Pilotkopf 9 oder den Griff 19 des Pilotkopfes 9 und damit den Roboterarm führt.

Die Steuereinheit 10, die Hard- und Software umfasst, ist so ausgebildet, dass sie zumindest eine vordefinierte Operation, die von dem Robotersystem durchführbar ist, vorgeben kann, wobei diese Operation die entsprechenden Steuerbefehle umfasst, mit denen die Achsen und der Antrieb des Roboters geregelt werden sowie die (in Fig. 1 nicht dargestellten) Sensoren des Roboters gesteuert werden.

Vorzugsweise sind dabei in der Steuereinheit eine Vielzahl von vordefinierten Operationen und die dazugehörigen Befehle abgespeichert. Zu diesen vordefinierten Operationen können dabei z.B. das Aufnehmen von Gegenständen, das Ablegen von Gegenständen, das Einfügen von Gegenständen, das Einschrauben von Gegenständen, das Bohren, die Oberflächenbearbeitung oder die Bedienung von Tasten gehören.

Den vordefinierten Operationen sind dabei in der Steuereinheit Icons zugeordnet, die auf einer graphischen Benutzeroberfläche, die über die Steuereinheit auf der Anzeigevorrichtung angezeigt werden kann, dargestellt werden können.

Bei einer bevorzugten Ausführungsform des erfindungsgemäßen Robotersystems kann dabei der Bediener über die Taster 13, 14, 15, 16 und 17 der Eingabevorrichtung die gewünschten Operationen, die das Robotersystem zur Bewältigung einer vorgegebenen Aufgabe durchführen soll, aus einem auf der graphischen Benutzeroberfläche dargestellten Menü auswählen, indem sich der Bediener z.B. mittels des D-Pad-Kurzhubtasters in dem Menü zu dem entsprechenden Operations-Icon bewegt und nach dessen Auswahl dieses Icon dann durch Betätigen einer der vier Bedienungstasten 13, 14, 15 und 16, die zuvor mit einer entsprechenden Funktion belegt wurde, bestätigt.

Bei einer alternativen Ausführungsform kann auch die Taste 20 zur Bestätigung einer vorher mittels des D-Pad-Hubschalters ausgewählten Operation verwendet werden.

Alternativ kann der Bediener auch durch Verschieben der Icons, die die Operationen repräsentieren, mittels des D-Pad-Kurzhubtasters die logische Reihenfolge der Operationen ändern, in der das Robotersystem den Arbeitsprozess abarbeiten soll.

Das Robotersystem gemäß der Erfindung kann bei einer weiteren Ausführungsform darüber hinaus so ausgebildet sein, dass die Steuereinheit so ausgebildet ist, dass sie auf der grafischen Benutzeroberfläche bei der Parametrierung einer Operation für jede Operation ein vorherbestimmtes und in der Steuereinheit gespeichertes Parametrierungs-Untermenü anzeigt, in dem die verschiedenen vorherbestimmten Parametrierungsoptionen dargestellt sind, die dann mit Eingabevorrichtung am Pilotkopf 9 über die Taster 13, 14, 15, 16, 17 und/oder 20 über eine Steuerung der grafischen Benutzeroberfläche des Parametrierungs- Untermenüs ausgewählt werden können, um eine Parametrierung durchzuführen.

Bei einer solchen Parametrierung können z.B. Parameter wie die Koordinaten von Punkten, die der Effektor anfahren soll, Drehmomente, Kräfte, Beschleunigungen, Zeitdauern, Anzahl der Wiederholungen oder Folgeoperationen einer Operation über die Eingabevorrichtung eingegeben werden.

Bei einer weiteren Ausführungsform werden in der Steuereinheit alle überhaupt möglichen Operationen des Robotersystems sowie alle möglichen Parametrierungs-Untermenüs für diese Operationen abgelegt, wobei diese so strukturiert werden, dass der Bediener an der Eingabevorrichtung mit einer sehr begrenzten Anzahl von Eingabeelementen, z.B. Tastern, alle Programmierungen des Robotersystems mithilfe der Eingabevorrichtung vornehmen kann, so dass die Programmierung ohne Zuhilfenahme von externen Eingabevorrichtungen wie Computertastaturen erfolgen kann. Im Idealfall kann das mit dem in Fig.1 dargestellten Pilotkopf sogar nur mit einer Hand erfolgen, so dass die zweite Hand des Bedieners für andere Funktionen, z.B. die Bedienung eines NOT-AUS-Schalters frei ist.

Die am Pilotkopf angebrachte Eingabevorrichtung muss nicht notwendigerweise aus Tastern bestehen, sondern kann z.B. auch ein Touchpad, einen Trackball, einen Joystick, ein Touchdisplay, einen Näherungssensor oder ähnliche Vorrichtungen umfassen.

Gemäß einer weiteren Ausführungsform des erfindungsgemäßen Robotersystems kann die Eingabevorrichtung darüber hinaus so ausgebildet sein, dass sie einem Benutzer des Robotersystems bei der Einstellung des Ablaufs von Operationen des Robotersystems und/oder der Parametrierung der vordefinierten Operationen für das Robotersystem eine an den Benutzer gerichtete Rückmeldung liefern kann.

Eine solche Rückmeldung kann z.B. optisch erfolgen, indem über das Leuchtfeld 18 statische oder variierende Lichtsignale abgegeben werden, die durch die Steuereinheit ausgelöst werden.

Bei einer anderen Ausführungsform kann die Rückmeldung so ausgebildet ist, dass sie haptisch durch den Bediener des Robotersystems erfassbar ist. Das kann z.B. durch ein Vibrieren der Eingabevorrichtung, d.h. des Pilotkopfes 9, geschehen, das von der Steuereinheit ausgelöst wird, indem ein zu dem Pilotkopf gehörender Antrieb entsprechend angesteuert wird.

Gemäß einer weiteren Ausführungsform kann das Tastenfeld auch mehrere Leuchtfelder aufweisen, über die die optischen Rückmeldungen erfolgen.

Die Rückmeldungssignale sind dabei vorzugsweise so ausgebildet, dass sie eine Eingabe des Bedieners positiv oder negativ bestätigen. So könnte z.B. bei einer fehlerhaften Eingabe des Bedieners das Leuchtfeld 18 rot aufleuchten, während es bei einer korrekten Eingabe grün aufleuchtet.

Bei einer weiteren Ausführungsform kann die Rückmeldung auch so ausgebildet sein, dass sie eine Aufforderung zur Auswahl einer vordefinierten Operation des Robotersystems aus einer Gruppe von vordefinierten Operationen oder eine Aufforderung zur Eingabe eines Parameters einer Operation darstellt.

Gemäß einer weiteren Ausführungsform kann die Steuereinheit so konfiguriert sein, dass durch Betätigung bestimmter Tasten und/oder bestimmter Tastenkombinationen auf der Eingabevorrichtung eine bestimmte Auswahl von Operationen und/oder Parametern erfolgt.

Ferner kann die Steuereinheit des Robotersystems gemäß einer weiteren Ausführungsform so ausgebildet sein, dass sie eine graphische Benutzeroberfläche auf einer Anzeigevorrichtung darstellen kann, auf der die vordefinierte Operation darstellbar ist, wobei die Steuereinheit darüber hinaus so ausgebildet ist, dass sie dem Bediener eine Rückmeldung in Abhängigkeit von der auf der graphischen Benutzeroberfläche dargestellten Operation liefern kann.

Bei einer weiteren Ausführungsform des Robotersystems gemäß der Erfindung kann die Rückmeldung auch durch ein akustisches Signal erfolgen. Hierzu kann z.B. direkt an der Eingabevorrichtung oder an einer anderen Stelle des Robotersystems ein Lautsprecher angebracht sein, der über die Steuereinheit angesteuert wird.

Die Anzeigevorrichtung des Robotersystems kann auch aus einer 3D-Anzeigevorrichtung bestehen, z.B. einer elektronischen 3D-Brille.

## Patentansprüche

1. Robotersystem (1) aufweisend zumindest einen Roboterarm, eine Steuereinheit (10), die so ausgebildet ist, dass sie zumindest eine vordefinierte Operation, die von dem Robotersystem (1) durchführbar ist, vorgibt, und zumindest eine an dem Roboterarm angebrachte Eingabevorrichtung (9;12), wobei der Roboterarm aus mehreren Armgliedern (3 - 9) besteht, und wobei die Eingabevorrichtung an dem Armglied (9) angebracht ist, an dem der Effektor angebracht werden kann;
wobei eine Anzeigevorrichtung (11) vorgesehen ist;
und wobei die Eingabevorrichtung (9;12) so ausgebildet ist, dass über die Eingabevorrichtung (9;12) der Ablauf von Operationen des Robotersystems (1) einstellbar ist und/oder die vordefinierten Operationen des Robotersystems (1) parametrierbar sind, **dadurch gekennzeichnet, dass**
die Eingabevorrichtung (9;12) darüber hinaus so ausgebildet ist, dass sie eine Steuerung auf einer grafischen Benutzeroberfläche, die durch die Steuereinheit (10) auf der Anzeigevorrichtung (11) dargestellt wird, durch einen Benutzer im Rahmen der Einstellung der vordefinierten Operationen des Robotersystems (1), der Einstellung der Reihenfolge der Operationen und/oder der Parametrierung der vordefinierten Operationen für das Robotersystem (1) bereitstellt.

2. Robotersystem nach Anspruch 1, bei dem die Eingabevorrichtung aus einem Tastenfeld (12) mit mehreren Tasten (13 - 17) besteht.

3. Robotersystem nach Anspruch 2, bei dem das Tastenfeld (12) eine oder mehrere Richtungstasten (17) umfasst, mit denen ein Cursor oder eine Auswahl in einem auf der grafischen Benutzeroberfläche dargestellten Menü in den Richtungen oben, unten, links und rechts steuerbar ist.

4. Robotersystem nach einem der vorhergehenden Ansprüche, bei dem die Operationen eine oder mehrere Operationen aus der Gruppe der Operationen Aufnehmen von Gegenständen, Ablegen von Gegenständen, Einfügen von Gegenständen, Einschrauben von Gegenständen, Bohren, Oberflächen bearbeiten oder Tasten bedienen umfassen.

5. Robotersystem nach einem der vorhergehenden Ansprüche, bei dem die Steuereinheit (10) so ausgebildet ist, dass sie auf der grafischen Benutzeroberfläche bei der Parametrierung einer Operation für jede Operation ein Parametrierungs-Untermenü anzeigt, in dem die verschiedenen vorherbestimmten Parametrierungsoptionen dargestellt sind, die dann mit der Eingabevorrichtung (12) über deren zweidimensionale Steuerung der grafischen Benutzeroberfläche des Parametrierungs-Untermenüs auswählbar sind, um eine Parametrierung durchzuführen.

6. Robotersystem nach einem der Ansprüche 1 bis 4, bei dem die Steuereinheit (10) so ausgebildet, dass sie auf der grafischen Benutzeroberfläche bei der Parametrierung ein Dialog-Menü anzeigt, wobei jede einzelne über das Dialog-Menü erscheinende Parameter-Abfrage über die Eingabevorrichtung (12) vorgenommen wird.

7. Robotersystem nach einem der vorhergehenden Ansprüche, bei dem die im Rahmen der Parametrierung erfassten Parameter Parameter umfassen, die aus Parameter-Gruppe stammen, die die Parameter Koordinaten von Punkten, die der Effektor anfahren soll, Drehmomente, Kräfte, Beschleunigungen, Zeitdauern, Anzahl der Wiederholungen oder Folgeoperationen einer Operation umfasst.

8. Robotersystem nach einem der vorhergehenden Ansprüche, bei der die Eingabevorrichtung (12) darüber hinaus so ausgebildet ist, dass sie dem Benutzer des Robotersystems (1) bei der Einstellung des Ablaufs von Operationen des Robotersystems (1) und/oder der Parametrierung der vordefinierten Operationen für das Robotersystem (1) eine an den Benutzer gerichtete Rückmeldung liefert.

9. Robotersystem nach Anspruch 8, bei dem die Rückmeldung optisch erfolgt.

10. Robotersystem nach Anspruch 9, bei dem die Rückmeldung durch statische oder variierende Lichtsignale erfolgt.

11. Robotersystem nach Anspruch 8, bei dem die Rückmeldung so ausgebildet ist, dass sie haptisch durch den Benutzer des Robotersystems (1) erfassbar ist.

12. Robotersystem nach Anspruch 11, bei dem die Rückmeldung in einem Vibrieren der Eingabevorrichtung (9;12) besteht.

13. Robotersystem nach Anspruch 9 oder 10, bei dem darüber hinaus das Tastenfeld (12) Leuchtfelder (18) aufweist, über die die optischen Rückmeldungen erfolgen.

14. Robotersystem nach einem der Ansprüche 9, 10 oder 13, bei dem die Tasten (13 - 17) des Tastenfeldes (12) so ausgebildet sind, dass sie Lichtsignale abgeben.

15. Robotersystem nach einem der Ansprüche 8 bis 14, bei dem die Rückmeldung so ausgebildet ist, dass sie eine Eingabe des Benutzers positiv oder negativ bestätigt oder eine neutrale Rückmeldung gibt.

16. Robotersystem nach einem der Ansprüche 8 bis 14, bei dem die Rückmeldung so ausgebildet ist, dass sie eine Aufforderung zur Auswahl einer vordefinierten Operation des Robotersystems (1) aus einer Gruppe von vordefinierten Operationen darstellt.

17. Robotersystem nach einem der Ansprüche 8 bis 14, bei dem die Rückmeldung so ausgebildet ist, dass sie eine Aufforderung zur Eingabe eines Parameters einer Operation darstellt.

18. Robotersystem nach einem der Ansprüche 8 bis 14, bei dem die Rückmeldung so ausgebildet ist, dass sie eine Fehlermeldung darstellt.

19. Robotersystem nach Anspruch 1, bei dem die Steuereinheit (10) so konfiguriert ist, dass durch Betätigung bestimmter Tasten (13 - 17;20) und/oder bestimmter Tastenkombinationen auf der Eingabevorrichtung (12) eine bestimmte Auswahl von Operationen und/oder Parametern erfolgt.

20. Robotersystem nach einem der Ansprüche 8 bis 19, bei welchem die Steuereinheit (10) so ausgebildet ist, dass sie die graphische Benutzeroberfläche auf der Anzeigevorrichtung (11) darstellt, auf der die vordefinierte Operation darstellbar ist und die Steuereinheit (10) darüber hinaus so ausgebildet ist, dass sie dem Benutzer eine Rückmeldung in Abhängigkeit von der auf der graphischen Benutzeroberfläche dargestellten Operation liefert.

21. Robotersystem nach einem der vorhergehenden Ansprüche 8 bis 18 oder 19, bei dem die Rückmeldung durch ein akustisches Signal erfolgt.

22. Robotersystem nach einem der vorhergehenden Ansprüche, bei dem die Anzeigevorrichtung eine 3D-Anzeigevorrichtung oder eine elektronische 3D-Brille ist.

## Claims

1. Robotic system (1) having at least one robotic arm, a control unit (10) adapted to preselect at least one predefined operation to be performed by the robotic system (1), and at least an input device (9;12) being arranged at the robotic arm, in which the robotic arm consists of a plurality of arm members (3 - 9), and in which the input device is being mounted on the arm member (9) to which the effector can be attached;
in which a display device (11) is provided;
and in which the input device (9;12) is being configured to set via the input device (9;12) the sequence of operations of the robotic system and/or to parameterize the predefined operations of the robotic system (1),
**characterized in that**
the input device (9;12) is being further adapted to enable control on a graphical user interface, which is represented by the control unit (10) on the display device (11), by the user as part of the setting of the predefined operations of the robotic system (1), of the setting of the sequence of operations and/or of the parameterization of the predefined operations for the robotic system (1).

2. Robotic system according to claim 1, in which the input device consists of a keypad (12) having several keys (13 - 17) .

3. Robotic system according to claim 2, in which the keypad (12) comprises one or more directional keys (17) with which a cursor or a selection in a menu displayed on the graphical user interface in the directions up, down, left and right can be controlled.

4. Robotic system according to any one of the preceding claims, in which the operations comprise one or more of the operations from the group including picking objects, placing objects, inserting objects, screwing objects, drilling, machining surfaces or actuating keys.

5. Robotic system according to any one of the preceding claims, in which the control unit (10) is adapted to display on the graphical user interface during the parameterization of an operation a parameterization submenu for each operation, in which the various predetermined parameterization options are shown, which then can be selected with the input device (12) via its two-dimensional control of the graphical user interface of the parameterization submenu in order to perform a parameterization.

6. Robotic system according to any one of claims 1 to 4, in which the control unit (10) is configured so that it displays a dialog menu on the graphical user interface during the parameterization, wherein each parameter query, which individually appears via the dialog menu, is made via the input device (12).

7. Robotic system according to any one of the preceding claims, in which the parameters acquired in the course of the parameterization comprise parameters derived from the parameter group including the parameters coordinates of points to be approached by the effector, torques, forces, accelerations, time periods, number of repetitions or follow-up operations of an operation.

8. Robotic system according to any one of the preceding claims, in which the input device (12) is further adapted to provide a user-directed feedback to the operator of the robotic system (1) when setting the execution of operations of the robotic system (1) and/or parameterizing the predefined operations for the robotic system (1).

9. Robotic system according to claim 8, in which the feedback is optically.

10. Robotic system according to claim 9, in which the feedback is effected by static or varying light signals.

11. Robotic system according to claim 8, in which the feedback is adapted to be haptically detectable by the operator of the robotic system (1).

12. Robotic system according to claim 11, in which the feedback consists of vibrating the input device (9;12).

13. Robotic system according to claim 9 or 10, in which in addition the keypad (12) has luminous fields (18), via which the optical feedback takes place.

14. Robotic system according to one of claims 9, 10 or 13, in which the keys (13 - 17) of the keypad (12) are adapted to emit light signals.

15. Robotic system according to one of claims 8 to 14, in which the feedback is arranged to positively or negatively confirm an operator input, or to provide neutral feedback.

16. Robotic system according to one of claims 8 to 14, in which the feedback is adapted to represent a request to select a predefined operation of the robotic system (1) from a group of predefined operations.

17. Robotic system according to one of claims 8 to 14, in which the feedback is adapted to represent a request to input a parameter of an operation.

18. Robotic system according to one of claims 8 to 14, in which the feedback is arranged to be an error message.

19. Robotic system according to claim 1, in which the control unit (10) is configured to perform a certain selection of operations and/or parameters by operating certain keys (13 - 17;20) and/or specific key combinations on the input device (12) .

20. Robotic system according to one of claims 8 to 19, in which the control unit (10) is adapted to display a graphical user interface on a display device (11) on which the predefined operation can be presented, and the control unit (10) is further configured to provide feedback to the operator depending on the operation represented on the graphical user interface.

21. Robotic system according to one of the preceding claims 8 to 18 or 19, in which the feedback is effected by an acoustic signal.

22. Robotic system according to any one of the preceding claims, in which the display device comprises a 3D display device or electronic 3D-glasses.

## Revendications

1. Système robotique (1) comportant au moins un bras robotique, une unité de commande (10) adaptée pour présélectionner au moins une opération prédéfinie à effectuer par le système robotique (1), et au moins un dispositif d'entrée (9;12) disposé sur le bras robotique, dans lequel le bras robotique consiste en une pluralité d'éléments de bras (3 - 9), et dans lequel le dispositif d'entrée est monté sur l'élément de bras (9) auquel l'effecteur peut être attaché;
dans lequel un dispositif d'affichage (11) est prévu;
et dans lequel le dispositif d'entrée (9;12) est configuré pour définir via le dispositif d'entrée (9;12) la séquence des opérations du système robotique et/ou pour paramétrer les opérations prédéfinies du système robotique (1),
caractérisé en
le dispositif d'entrée (9;12) est en outre adapté pour permettre à l'utilisateur de contrôler une interface utilisateur graphique, représentée par l'unité de commande (10) sur le dispositif d'affichage (11), dans le cadre du réglage des opérations prédéfinies du système robotique (1), du réglage de la séquence d'opérations et/ou du paramétrage des opérations prédéfinies pour le système robotique (1).

2. Système robotique selon la revendication 1, dans lequel le dispositif d'entrée consiste en un clavier (12) comportant plusieurs touches (13 - 17).

3. Système robotique selon la revendication 2, dans lequel le clavier (12) comprend une ou plusieurs touches directionnelles (17) permettant de commander un curseur ou une sélection dans un menu affiché sur l'interface utilisateur graphique dans les directions haut, bas, gauche et droite.

4. Système robotique selon l'une quelconque des revendications précédentes, dans lequel les opérations comprennent une ou plusieurs opérations du groupe comprenant la prise d'objets, le placement d'objets, l'insertion d'objets, le vissage d'objets, le perçage, l'usinage de surfaces ou l'actionnement de touches.

5. Système robotique selon l'une quelconque des revendications précédentes, dans lequel l'unité de commande (10) est adaptée pour afficher sur l'interface graphique utilisateur pendant le paramétrage d'une opération un sous-menu de paramétrage pour chaque opération, dans lequel les différentes options de paramétrage prédéterminées sont affichées, qui peuvent ensuite être sélectionnées avec le dispositif d'entrée (12) via son contrôle bidimensionnel de l'interface graphique utilisateur du sous-menu de paramétrage afin d'effectuer un paramétrage.

6. Système robotique selon l'une des revendications 1 à 4, dans lequel l'unité de commande (10) est configurée de manière à afficher un menu de dialogue sur l'interface utilisateur graphique pendant le paramétrage, où chaque requête de paramètre, qui apparaît individuellement via le menu de dialogue, est effectuée via le dispositif d'entrée (12).

7. Système robotique selon l'une quelconque des revendications précédentes, dans lequel les paramètres acquis au cours du paramétrage comprennent des paramètres dérivés du groupe de paramètres comprenant les paramètres coordonnées des points à approcher par l'effecteur, couples, forces, accélérations, périodes de temps, nombre de répétitions ou d'opérations de suivi d'une opération.

8. Système robotique selon l'une quelconque des revendications précédentes, dans lequel le dispositif d'entrée (12) est en outre adapté pour fournir un retour d'information à l'opérateur du système robotique (1) lors du réglage de l'exécution des opérations du système robotique (1) et/ou du paramétrage des opérations prédéfinies pour le système robotique (1).

9. Système robotique selon la revendication 8, dans lequel le retour d'information est optique.

10. Système robotique selon la revendication 9, dans lequel le retour d'information est effectué par des signaux lumineux statiques ou variables.

11. Système robotique selon la revendication 8, dans lequel le retour d'information est adapté pour être détectable de manière haptique par l'opérateur du système robotique (1).

12. Système robotique selon la revendication 11, dans lequel le retour d'information consiste à faire vibrer le dispositif d'entrée (9;12).

13. Système robotique selon la revendication 9 ou 10, dans lequel le clavier (12) comporte en outre des champs lumineux (18), par l'intermédiaire desquels s'effectue le retour d'information optique.

14. Système robotique selon l'une des revendications 9, 10 ou 13, dans lequel les touches (13 - 17) du clavier (12) sont adaptées pour émettre des signaux lumineux.

15. Système robotique selon l'une des revendications 8 à 14, dans lequel le retour d'information est conçu pour confirmer positivement ou négativement une entrée de l'opérateur, ou pour fournir un retour d'information neutre.

16. Système robotique selon l'une des revendications 8 à 14, dans lequel le retour d'information est adapté pour représenter une demande de sélection d'une opération prédéfinie du système robotique (1) dans un groupe d'opérations prédéfinies.

17. Système robotique selon l'une des revendications 8 à 14, dans lequel le retour d'information est adapté pour représenter une demande de saisie d'un paramètre d'une opération.

18. Système robotique selon l'une des revendications 8 à 14, dans lequel le retour d'information est conçu pour être un message d'erreur.

19. Système robotique selon la revendication 1, dans lequel l'unité de commande (10) est configurée pour effectuer une certaine sélection d'opérations et/ou de paramètres en actionnant certaines touches (13 - 17;20) et/ou des combinaisons de touches spécifiques sur le dispositif d'entrée (12) .

20. Système robotique selon l'une des revendications 8 à 19, dans lequel l'unité de commande (10) est adaptée pour afficher une interface utilisateur graphique sur un dispositif d'affichage (11) sur lequel l'opération prédéfinie peut être présentée, et l'unité de commande (10) est en outre configurée pour fournir un retour d'information à l'opérateur en fonction de l'opération représentée sur l'interface utilisateur graphique.

21. Système robotique selon l'une des revendications précédentes 8 à 18 ou 19, dans lequel le retour d'information est effectué par un signal acoustique.

22. Système robotique selon l'une des revendications précédentes, dans lequel le dispositif d'affichage comprend un dispositif d'affichage 3D ou des lunettes électroniques 3D.
